# EUROPÄISCHE PATENTSCHRIFT

(11) **EP 3 924 620 B1**
(45) Veröffentlichungstag und Bekanntmachung des Hinweises auf die Patenterteilung: **10.04.2024**
(21) Anmeldenummer: 20706408.0
(22) Anmeldetag: 11.02.2020
(51) Int. Cl.: F03D 1/06, F03D 80/50

(54) **VERFAHREN ZUM REPARIEREN EINES WINDENERGIEANLAGEN-ROTORBLATTES**
METHOD FOR REPAIRING A ROTOR BLADE OF A WIND TURBINE
PROCÉDÉ POUR RÉPARER UNE PALE DE ROTOR D'ÉOLIENNE

(30) Priorität: 11.02.2019 DE 102019103304
(43) Veröffentlichungstag der Anmeldung: 22.12.2021
(73) Patentinhaber: Wobben Properties GmbH, 26607 Aurich (DE)
(72) Erfinder: RAHMANN, Uwe, 26629 Großefehn (DE); KUBASIK, Andre, 26603 Aurich (DE); JANSSEN, Michael, 26603 Aurich (DE); SCHICKEL, Manuel, 26607 Aurich (DE)
(74) Vertreter: Eisenführ Speiser
(86) Internationale Anmeldenummer: PCT/EP2020/053392
(87) Internationale Veröffentlichungsnummer: WO 2020/165123

(56) Entgegenhaltungen:
- EP-A1- 2 927 482
- WO-A1-2016/189278
- WO-A1-2017/114528
- WO-A1-2018/051153
- DE-A1-102016 213 206

## Beschreibung

Die vorliegende Erfindung betrifft ein Verfahren zum Reparieren eines Windenergieanlagen-Rotorblattes.

Die Rotorblätter einer Windenergieanlage sind beim Betrieb der Windenergieanlage Umwelteinflüssen ausgesetzt. Durch Umwelteinflüsse und Partikel in der Luft kommt es zu einer Erosion der Rotorblätter. Eine derartige Erosion kann zu einer Veränderung der aerodynamischen Eigenschaften des Rotorblattes führen. Ferner kann die Erosion zu Schäden an den Rotorblättern führen, welche behoben werden müssen.

Bislang wurde Erosionsschäden an einem Windenergieanlagen-Rotorblatt typischerweise behoben, indem die schadhaften Stellen mittels eines Spachtelmaterials verfüllt wurden, die Spachtelmasse ausgehärtet wurde, und das Spachtelmaterial in Kontur geschliffen wurde. Anschließend wurde typischerweise ein flüssiger (zwei Komponenten) 2K-Kantenschutzlack aufgebracht. Bei einem derartigen Verfahren ist es jedoch nachteilig, dass das Kantenschutzmaterial bei der Verarbeitung ungeschützt den Witterungsbedingungen ausgesetzt ist. Der 2K-Kantenschutzlack wird typischerweise durch Aufrollen aufgebracht, wodurch es vorkommen kann, dass mehrere Schichten des Materials durch Aufrollen aufgebracht werden müssen, um die gewünschte Schichtdicke erhalten zu können. Wenn eine der Schichten jedoch nicht besonders gut haftet, dann hat dies negative Auswirkungen auf die nachfolgenden Schichten.

In der prioritätsbegründenden deutschen Patentanmeldung hat das Deutsche Patent- und Markenamt das folgende Dokument recherchiert: DE 10 2016 213 206 A1.

Die Aufgabe der Erfindung besteht darin, ein Verfahren zum Reparieren eines Windenergieanlagen-Rotorblattes vorzusehen, welches eine effektivere Reparatur ermöglicht.

Diese Aufgabe wird durch ein Verfahren zum Reparieren eines Windenergieanlagen-Rotorblattes nach Anspruch 1 gelöst.

Somit wird ein Verfahren zum Reparieren eines Windenergieanlagen-Rotorblattes, insbesondere eines Bestandswindenergieanlagen-Rotorblattes, vorgesehen, welches Erosionsschäden oder Transportschäden aufweist. Ein erster Bereich wird in eine Oberfläche oder eine Oberflächenbeschichtung des Rotorblattes abgetragen. Ein Kleber wird auf den abgetragenen Bereich aufgetragen, eine Erosionsschutzfolie wird auf dem Kleber platziert und der Kleber wird ausgehärtet.

Gemäß einem Aspekt der vorliegenden Erfindung erfolgt eine Reparatur oder eine Nachrüstung eines Erosionsschutzes an einem Windenergieanlagen-Rotorblatt bei Rotorblättern, welche bereits im Betrieb waren und Erosionsschäden aufweisen. Hierzu kann eine IAL-Erosionsschutzfolie auf den beschädigten Bereichen, bzw. Abschnitten des Windenergieanlagen-Rotorblattes platziert werden.

Gemäß einem Aspekt der vorliegenden Erfindung kann ein Rücksprung in der Oberflächenbeschichtung des Rotorblattes gefräst werden. Optional können die vorhandenen Erosionsschäden angeschliffen oder begradigt werden. Die Vorderkante kann gereinigt bzw. entstaubt werden und die Rotorblattoberfläche kann entlang der Fräskanten abgeklebt werden. Optional kann ein Vakuumdichtband aufgetragen werden. Eine IAL-Rolle wird an dem Rotorblatt fixiert und ein pastöser Kleber wird aufgetragen. Die IAL-Erosionsfolie wird auf den Kleber aufgetragen und gleichmäßig angedrückt. Eine Vakuumfolie wird über die IAL-Erosionsschutzfolie platziert und optional kann ein Vakuum erzeugt werden. Mittels einer Heizmatte kann der Kleber ausgehärtet werden und die Heizmatte, die Vakuumfolie und die Kleberbänder können entfernt werden.

Gemäß der Erfindung kann somit eine Behebung von Erosionsschäden auf einfache Art und Weise erfolgen. Durch das Auftragen des Klebers, kann hierbei der Kleber als Ausgleichsemasse verwendet werden. Damit lässt sich sowohl eine Ausbesserung der Erosionsschäden als auch ein Austausch eines Erosionsschutzes für das Rotorblatt in einem Arbeitsvorgang durchführen.

Weitere Ausgestaltung der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung, und
- Fig. 2A und 2B: zeigen jeweils eine perspektivische Schnittansicht eines Windenergie- anlagen-Rotorblattes.

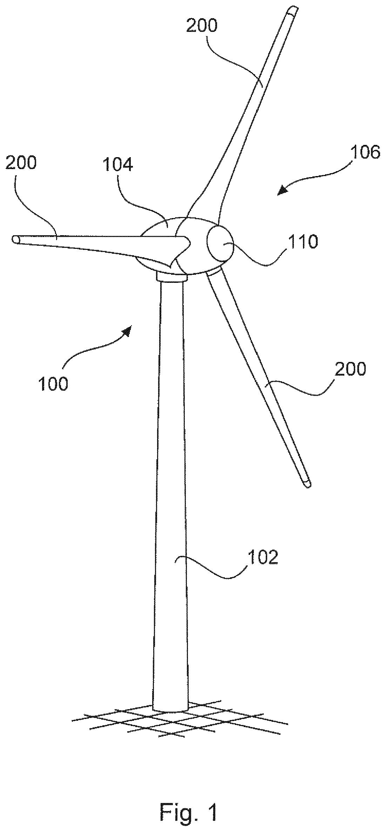

Fig. 1 zeigt eine schematische Darstellung einer Windenergieanlage gemäß der Erfindung. Fig. 1 zeigt eine Windenergieanlage 100 mit einem Turm 102 und einer Gondel 104. An der Gondel 104 ist ein Rotor 106 mit drei Rotorblättern 200 und einem Spinner 110 angeordnet. Der Rotor 106 wird im Betrieb durch den Wind in eine Drehbewegung versetzt und treibt dadurch einen Generator in der Gondel 104 an.

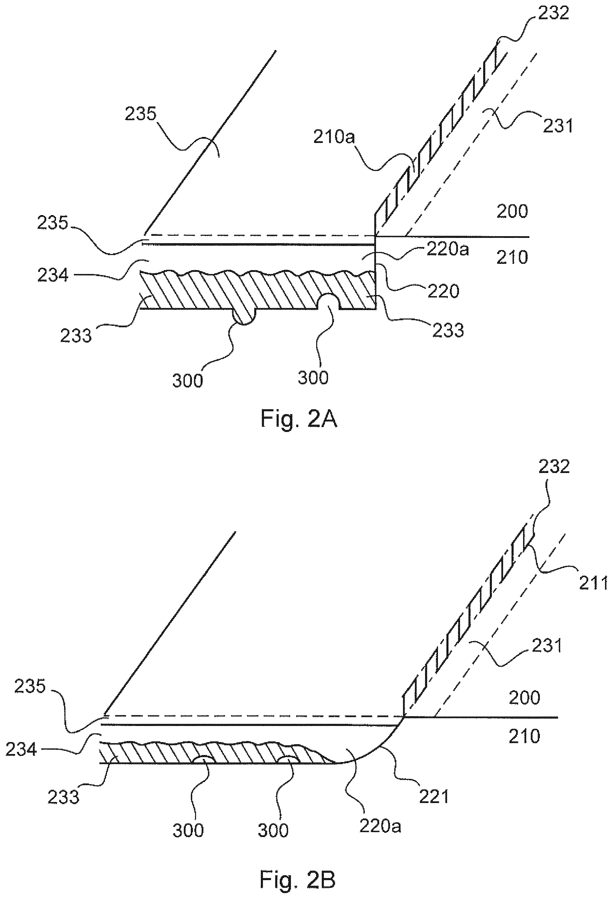

Fig. 2A zeigt eine perspektivische Schnittansicht eines Windenergieanlagen-Rotorblattes. Zur Reparatur von Schäden 300 in oder an dem Rotorblatt 200 wird gemäß einem Aspekt der vorliegenden Erfindung ein Rücksprung 220 in die Oberfläche bzw. Oberflächenbeschichtung 210 des Rotorblattes 200 gefräst. Dies kann beispielsweise mittels einer Oberfräsen-Führungseinheit erfolgen. Schäden, insbesondere Erosionsschäden 300 im Bereich des Rücksprungs 220 können weiterbearbeitet werden (Anschleifen/Begradigen). Optional kann eine Vorderkante des Rotorblattes 200 entstaubt und gereinigt werden. Auf der Rotorblattoberfläche kann entlang einer Fräskante 210a ein Klebeband 231 vorgesehen werden, um die Fräskanten 210a abzukleben. Optional kann ein Vakuumdichtband 232 ebenfalls in diesem Bereich vorgesehen werden.

Fig. 2B zeigt eine perspektivische Schnittansicht eines Windenergieanlagen-Rotorblattes. Zur Reparatur der Schäden 300 in oder an dem Rotorblatt 200 wird die Oberfläche bzw. die Oberflächenbeschichtung 210 des Rotorblattes 200 im Verklebebereich abgeschliffen. Schäden 300 im abgeschliffenen Bereich können durch Anschleifen und Begradigen weiter bearbeitet werden. Optional kann eine Vorderkante des Rotorblattes entstaubt und gereinigt werden. Auf der Rotorblattoberfläche kann entlang der Schleifkante ein Klebeband 231 vorgesehen werden, um die Schleifkante 211 abzukleben. Optional kann ein Vakuumdichtband 232 ebenfalls in diesem Bereich vorgesehen werden.

Während des erfindungsgemäßen Reparaturverfahrens befindet sich das Rotorblatt entweder noch an der Gondel der Windenergieanlage oder das Rotorblatt wurde für die Reparatur demontiert und befindet sich am Boden.

Sofern sich das Rotorblatt noch an der Gondel befindet, kann beispielsweise eine Arbeitsbühne verwendet werden, um die Arbeiter nach oben zu befördern. Ein Ende einer Erosionsschutzfolie 234 kann an dem Rotorblatt 200 befestigt werden und Kleber 233 kann in dem Rücksprung 220 oder dem abgeschliffenen oder abgetragenen Bereich aufgetragen werden. Der Kleber 233 ist vorteilhaft, weil durch ihn Unebenheiten aufgrund der Schäden 300 ausgeglichen werden können. Der Kleber 233 kann einen pastösen Kleber darstellen. Anschließend kann die Erosionsschutzfolie 234 aufgetragen werden. Die Erosionsschutzfolie 234 kann auf dem Klebstoff 233 aufgelegt und angedrückt werden. Hierbei sollte darauf geachtet werden, dass der Kleber 233 und Lufteinschlüsse von der Mitte aus zu beiden Seiten verdrängt werden. Eine Vakuumfolie 235 kann auf der Erosionsschutzfolie 234 platziert werden und mittels des Vakuumdichtbandes 232 an den Fräskanten 210a oder den Schleifkanten 211 befestigt werden.

Optional kann ein Vakuum unterhalb der Vakuumfolie 235 erzeugt werden und der Kleber 233 kann aushärten. Um die Aushärtung zu beschleunigen kann eine Heizmatte verwendet werden. Nachdem der Kleber bzw. Klebstoff 233 ausgehärtet ist, können die Heizmatte, die Vakuumfolie 235, das Vakuumdichtband 232 und das Klebband 231 entfernt werden. Falls überstehenden Kleberkanten vorhanden sind, können diese geglättet werden.

Anschließend kann das Rotorblatt soweit notwendig wieder an der Gondel montiert werden.

Somit kann erfindungsgemäß ein haltbarer Erosionsschutz auf einfache Art und Weise bei einem Windenergieanlagen-Rotorblatt nachgerüstet werden. Dies ist insbesondere vorteilhaft, weil damit ein zukünftiger Wartungsaufwand erheblich reduziert werden kann.

Erfindungsgemäß können somit in einem Arbeitsvorgang sowohl Erosionsschäden ausgebessert werden als auch ein Erosionsschutz erneuert werden.

## Patentansprüche

1. Verfahren zum Reparieren eines Windenergieanlagen-Rotorblattes, welches Erosionsschäden oder Transportschäden aufweist, mit den Schritten:
Abtragen eines ersten Bereiches (220a) um einen Erosionsschaden oder Transportschäden herum in einer Oberfläche oder Oberflächenbeschichtung (210) des Rotorblattes (200),
Auftragen eines Klebers (233) als Ausgleichsmasse (200) in dem abgetragenen Bereich (220a) der Rotorblattoberfläche oder der Oberflächenbeschichtung, um den abgetragenen Bereich auszugleichen,
Platzieren einer Erosionsschutzfolie (234) auf dem Kleber (233), und
Aushärten des Klebers (233).

2. Verfahren nach Anspruch 1, wobei
der Kleber (233) einen pastösen Kleber darstellt.

3. Verfahren nach Anspruch 1 oder 2, wobei
das Abtragen des ersten Bereiches (220a) durch ein Ausfräsen eines Rücksprungs (220) in eine Oberfläche oder Oberflächenbeschichtung (210) des Rotorblattes (200) oder durch ein Abschleifen der Oberfläche oder der Oberflächenbeschichtung (210) erfolgt.

4. Verfahren nach einem der Ansprüche 1 bis 3, ferner mit den Schritten:
Auftragen einer Vakuumfolie (235) auf die Erosionsschutzfolie (234) und Abkleben der Vakuumfolie (235) mittels eines Vakuumdichtbandes (323) an einer Fräskante (210a) oder einer Schleifkante (211), und
Erzeugen eines Vakuums unterhalb der Vakuumfolie (235) und Aushärten des Klebers (233).

5. Verfahren nach einem der Ansprüche 1 bis 4, wobei
das zu reparierende Windenergieanlagen-Rotorblatt (200) während der Reparatur an einem Rotor (106) einer Windenergieanlage (100) befestigt ist.

## Claims

1. A method of repairing a wind turbine rotor blade which has erosion damage or transport damage, comprising the steps:
ablating a first region (220a) around an erosion damage or a transport damage into a surface or surface coating (210) of the rotor blade (200),
applying an adhesive (233) as a levelling material (200) in the ablated region (220a) of the rotor blade surface or the surface coating, to level the ablated region,
placing an erosion protection film (234) on the adhesive (233), and
curing the adhesive (233).

2. A method according to claim 1 wherein
the adhesive (233) represents a pasty adhesive.

3. A method according to claim 1 or claim 2 wherein
ablation of the first region (220a) is effected by milling out a recess (220) in a surface or surface coating (210) of the rotor blade (200) or grinding the surface or the surface coating (210).

4. A method according to one of claims 1 to 3 and further comprising the steps:
applying a vacuum film (235) to the erosion protection film (234) and masking the vacuum film (235) by means of a vacuum sealing tape (323) at a milled edge (210) or a ground edge (211), and
creating a vacuum beneath the vacuum film (235) and curing the adhesive (233).

5. A method according to one of claims 1 to 4 wherein
the wind turbine rotor blade (200) to be repaired is fixed to a rotor (106) of a wind turbine (100) during the repair.

## Revendications

1. Procédé de réparation d'une pale de rotor d'éolienne qui présente des dommages dus à l'érosion ou des dommages dus au transport, avec les étapes suivantes :
l'enlèvement d'une première zone (220a) autour d'un dommage dû à l'érosion ou de dommages dus au transport dans une surface ou un revêtement de surface (210) de la pale de rotor (200),
l'application d'une colle (233) comme masse d'équilibrage (200) dans la zone (220a) enlevée de la surface de pale de rotor ou du revêtement de surface afin d'équilibrer la zone enlevée,
le placement d'un film de protection contre l'érosion (234) sur la colle (233), et
le durcissement de la colle (233).

2. Procédé selon la revendication 1, dans lequel
la colle (233) constitue une colle pâteuse.

3. Procédé selon la revendication 1 ou 2, dans lequel
l'enlèvement de la première zone (220a) est effectué par un fraisage d'un retrait (220) dans une surface ou un revêtement de surface (210) de la pale de rotor (200) ou par un meulage de la surface ou du revêtement de surface (210).

4. Procédé selon l'une des revendications 1 à 3, de plus avec les étapes suivantes :
l'application d'un film à vide (235) sur le film de protection contre l'érosion (234) et le collage du film à vide (235) au moyen d'une bande étanche au vide (323) au niveau d'une arête de fraisage (210a) ou d'une arête de meulage (211), et
la génération d'un vide en dessous du film à vide (235) et le durcissement de la colle (233).

5. Procédé selon l'une des revendications 1 à 4, dans lequel
la pale de rotor d'éolienne (200) à réparer est fixée pendant la réparation à un rotor (106) d'une éolienne (100).
